(19) **Europäisches Patentamt**

**European Patent Office**

**Office européen des brevets**

(11) **EP 1 096 798 B1**

(12) **EUROPÄISCHE PATENTSCHRIFT**

(45) Veröffentlichungstag und Bekanntmachung des Hinweises auf die Patenterteilung:
**02.11.2006 Patentblatt 2006/44**

(51) Int Cl.:
***H04N 7/18*** (2006.01)

(21) Anmeldenummer: **00122675.2**

(22) Anmeldetag: **18.10.2000**

(54) **Bildverarbeitungsverfahren in einem optronischen Beobachtungssystem für militärische Fahrzeuge, insbesondere Kampffahrzeuge, sowie Einrichtung zur Durchführung des Verfahrens**

Image processing method in an optronic observation system for military vehicles, particularly for combat vehicles, and device for carrying out the method

Méthode de traitement d'images dans un système optronique d'observation pour des véhicules militaires, en particulier pour des véhicules de combat, et dispositif pour la mise en oeuvre de ce procédé

(84) Benannte Vertragsstaaten:
**AT BE CH CY DE DK ES FI FR GB GR IE IT LI LU MC NL PT SE**

(30) Priorität: **27.10.1999 DE 19951699**

(43) Veröffentlichungstag der Anmeldung:
**02.05.2001 Patentblatt 2001/18**

(73) Patentinhaber: **Krauss-Maffei Wegmann GmbH & Co. KG**
**34127 Kassel (DE)**

(72) Erfinder: **Bachmann, Jörg**
**34613 Schwalmstadt (DE)**

(74) Vertreter: **Feder, Wolf-Dietrich et al**
**Dr. Wolf-D. Feder,**
**Dipl.-Ing. P.-C. Sroka**
**Dominikanerstrasse 37**
**40545 Düsseldorf (DE)**

(56) Entgegenhaltungen:
**EP-A- 0 642 275       EP-A- 0 949 818**
**WO-A-86/04204        DE-A- 3 702 220**
**DE-A- 4 102 729       US-A- 4 772 942**
**US-A- 5 657 073**

## Beschreibung

Die Erfindung betrifft ein Bildverarbeitungsverfahren in einem optronischen Beobachtungssystem für militärische Fahrzeuge, insbesondere Kampffahrzeuge sowie eine Einrichtung zur Durchführung des Verfahrens.

Bei militärischen Fahrzeugen, insbesondere Kampffahrzeugen, bei denen der direkte Zugang der Besatzung zu den eingebauten Sichtgeräten nicht ermöglicht werden kann, wie z.B. bei Kampffahrzeugen mit einer elevierbaren Sensorplattform, oder bei denen aus anderen Gründen, wie z.B. Schutzanforderungen auf den Einbau von Winkelspiegeln verzichtet werden muß, kommen optronische Beobachtungssysteme zum Einsatz, welche eine vorgegebene Anzahl von Videokameras aufweisen, deren Bilder auf im Mannschaftsraum angeordneten Monitoren dargestellt werden.

Werden, um einen größeren Sichtbereich zu erhalten, die Videokameras so angeordnet, daß ihre optischen Achsen in verschiedene Richtungen weisen und in einer horizontalen Ebene einen vorgegebenen Winkelabstand aufinreisen und die Bilder dieser Videokameras auf einer entsprechenden Anzahl von Monitoren gleichzeitig dargestellt, so hat dies zur Folge, daß sich aufgrund der geometrischen Anordnung der Videokameras zueinander Sichtbereiche überschneiden, was zu Irritationen beim Beobachter führen kann. Dies äußert sich beispielsweise in der Form, daß auf zwei benachbarten Monitoren ein Zielobjekt dargestellt wird und der Betrachter nicht ohne weiteres erkennen kann, ob es sich um zwei unterschiedliche Ziele handelt.

Dieser Effekt kann zwar durch eine geschickte Anordnung der Videokameras minimiert werden, er ist aber nicht vollständig zu eliminieren.

Der Erfindung liegt die Aufgabe zugrunde, ein Bildverarbeitungsverfahren in einem optronischen Beobachtungssystem für militärische Fahrzeuge, insbesondere Kampffahrzeuge zu schaffen, wobei das Beobachtungssystem Merkmale aus dem Oberbegriff der Patentansprüche 1 und 5 aufweist, und mit dem die Überlappungsbereiche der Sichtbereiche der Videokameras derart eliminiert werden, daß auf den an die Videokameras angeschlossenen Monitoren das aufgenommene Bild für die eingestellte Entfernung lückenlos aber ohne Mehrfachabbildungen dargestellt wird. Diese Bildverarbeitung sollte mit möglichst begrenztem apparativem Aufwand durchführbar sein.

Die Lösung dieser Aufgabe erfolgt verfahrensmäßig mit den Merkmalen aus dem kennzeichnenden Teil des Patentanspruchs 1 und apparativ mit den Merkmalen aus dem kennzeichnenden Teil des Patentanspruchs 5. Vorteilhafte Weiterbildungen der Erfindung sind in den abhängigen Ansprüchen beschrieben.

Wie weiter unten anhand eines Ausführungsbeispiels näher erläutert, besteht der Grundgedanke der Erfindung darin, eine Überlappungsbereichsminimierung der Sichtbereiche der Videokameras durch eine digitale Bildverarbeitung zu erreichen, die mittels eines PC durchführbar ist. Hierbei werden Überlappungsbereiche durch den Einsatz einer speziellen, weiter unten erläuterten digitalen Maske in Echtzeit gefiltert. Es wird also kein digitaler Vergleich durchgeführt. Das erfindungsgemäße Verfahren ist nur dann einsetzbar, wenn der geometrische Abstand zwischen den Videokameras bekannt ist. Aus der geometrischen Anordnung der Videokameras zueinander, dem Öffnungswinkel der Kameraobjektive und der Entfernung zum Objekt sind die Überlappungsbereiche berechenbar. Die Berechnung kann an jedem Beobachtungssystem vorab durchgeführt werden und die ermittelten Überlappungsbereiche werden einer bestimmten Pixelbreite zugeordnet, die dann mit Hilfe der Bildverarbeitung minimiert wird. Da sich mit der Entfernung zum Objekt auch die Überlappungsbereiche der Sichtbereiche verändern, werden die zu eliminierenden Bereiche vorab für alle vom Beobachtungssystem erfaßbaren Entfernungen berechnet. Im Betrieb kann der Bediener explizit eine Entfernung anwählen und das Bildverarbeitungssystem berechnet die Pixelbreite, welche entfernt werden muß. Die berechneten Pixelbreiten werden dann auf dem Monitor rechts und links vom Bild "abgeschnitten". Das erfindungsgemäße Verfahren eröffnet auch die Möglichkeit, nach dem Eliminieren der Überlappungsbereiche die Bilder digital aneinander anzufügen. Es wird dann das "zusammengefügte" Bild auf einem Monitor dargestellt. Gleichzeitig kann das restliche Bild zusammen mit dem Bild der nächsten Videokamera auf einem anderen Monitor dargestellt werden. D.h. es können zwei Videobilder, die aus mindestens drei Kamerabildern zusammengefügt werden, wobei jedes Bild eine Überlappungsbereichsminimierung aufweist, in Echtzeit auf zwei Monitoren dargestellt werden. Dabei treten keine Lücken in der Darstellung auf und es werden keine Bildelemente doppelt dargestellt.

Im folgenden wird das erfindungsgemäße Verfahren und eine Einrichtung zu seiner Durchführung anhand von in den beigefügten Zeichnungen dargestellten Ausführungsbeispielen näher erläutert.

In den Zeichnungen zeigen:

Fig. 1 in einer stark schematisierten Darstellung die Videokameras eines optronischen Beobachtungssystems mit den eingezeichneten Sichtbereichen und Überlappungsbereichen;

Fig. 2 in einer vereinfachten schematischen Darstellung ein optronisches Beobachtungssystem mit zwei Videokameras zur Erläuterung der Berechnung der Überlappungsbereiche;

Fig. 3 ein Zuordnungsschema für ein Beobachtungssystem mit acht Videokameras und zwei Monitoren ohne die digitale Bildverarbeitung;

Fig. 4 das Zuordnungsschema nach Fig. 3 bei digitaler Bildverarbeitung;

Fig. 4A das Zuordnungsschema nach Fig. 3 und 4 bei digitaler Bildverarbeitung und Bildverschiebung;

Fig. 5 in einem Blockschaltbild ein optronisches Beobachtungssystem mit acht Videokameras und drei Monitoren.

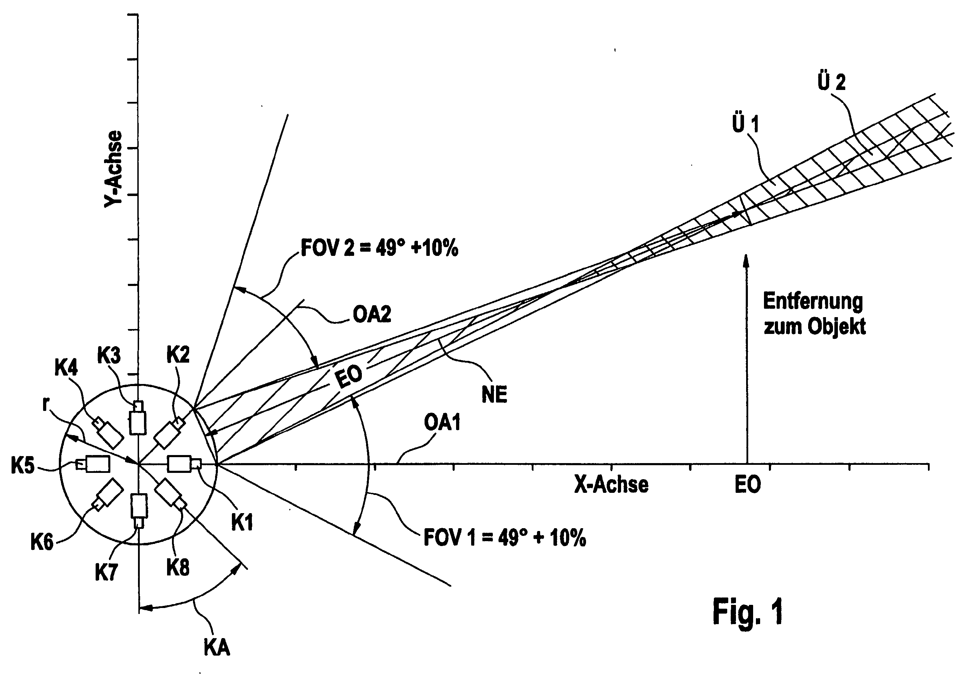

In Fig. 1 sind in einem ebenen X-Y-Koordinatensystem die Videokameras K1 bis K8 eines im übrigen nicht dargestellten Beobachtungssystems derart angeordnet, daß ihre optischen Achsen, beispielsweise die Achsen OA1 und OA2 der Kameras K1 und K2, in einer horizontalen Ebene liegen und alle den gleichen Winkelabstand KA von 45° besitzen. Die Kameras K1 bis K8 besitzen auch alle den gleichen Sichtbereich von 49°, der in Fig. 1 für die Kameras K1 und K2 mit FOV1 bzw. FOV2 bezeichnet ist.

Aus Fig. 1 ist abzulesen, daß infolge der Anordnung der Kameras und der Sichtbereiche in der engeren Umgebung der Kameras Bereiche NE entstehen, die nicht einsehbar sind. Weiterhin entstehen für jeweils zwei aneinander angrenzende Sichtbereiche, beispielsweise FOV1 und FOV2 ein Überlappungsbereich Ü1, wenn keine besondere Bildverarbeitung stattfindet. Es ist deutlich zu erkennen, daß, wenn sich die jeweilige Entfernung EO zum Objekt ändert, sich auch die Bereiche ändern, in denen eine Überlappung der jeweiligen Monitorbilder auftritt.

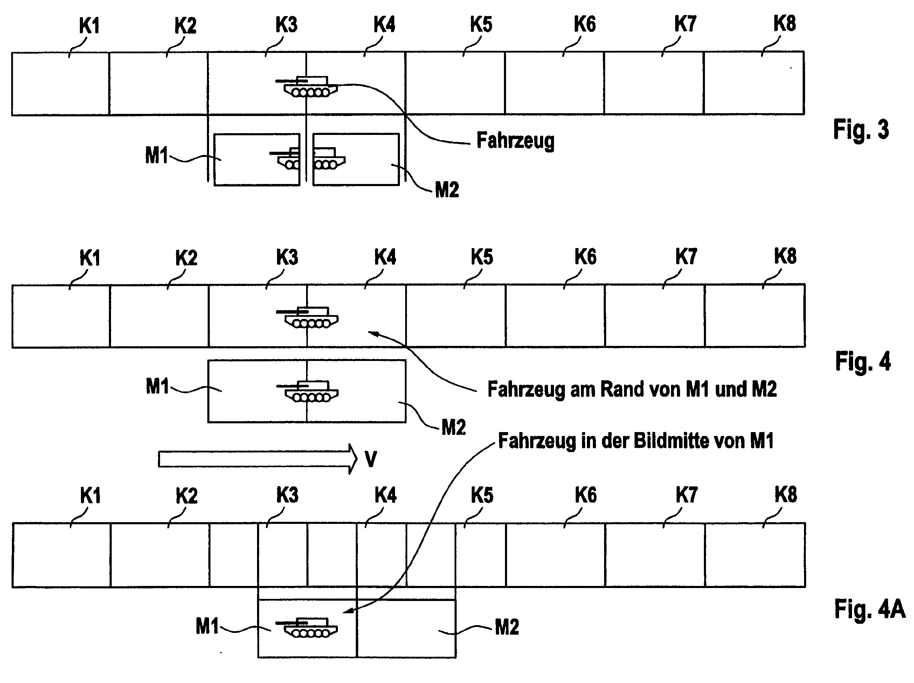

Fig. 3 zeigt in einem Zuordnungsschema, welche Folgen die Überlappungsbereiche für die Darstellung am Monitor haben. In Fig. 3 ist vorausgesetzt, daß ein Monitor M1 an die Kamera K2 und ein Monitor M2 an die Kamera K3 angeschlossen ist. Wenn sich nun ein Fahrzeug am Rand der Sichtbereiche der beiden Kameras K2 und K3 befindet, wird beispielsweise der vordere Teil des Fahrzeugs auf Monitor M1 und der hintere Teil des Fahrzeugs auf Monitor M2 abgebildet. Dies kann auch wegen der räumlichen Trennung der beiden Monitore M1 und M2 zu erheblichen Fehlinterpretationen der Bilder führen, zumal ohne Bildbearbeitung infolge der Überlappung der Sichtbereiche sich die beiden Bilder auf den Monitoren M1 und M2 nicht einfach ergänzen, sondern die an den einander zugewandten Rändern erscheinenden Teile des Bildes doppelt abgebildet werden, d.h. auf beiden Monitoren erscheinen und so die Interpretation erschweren.

Durch das unten erläuterte Verfahren der Bildverarbeitung soll nun erreicht werden, daß keine Bildteile doppelt dargestellt werden und andererseits keine Bildlücken entstehen.

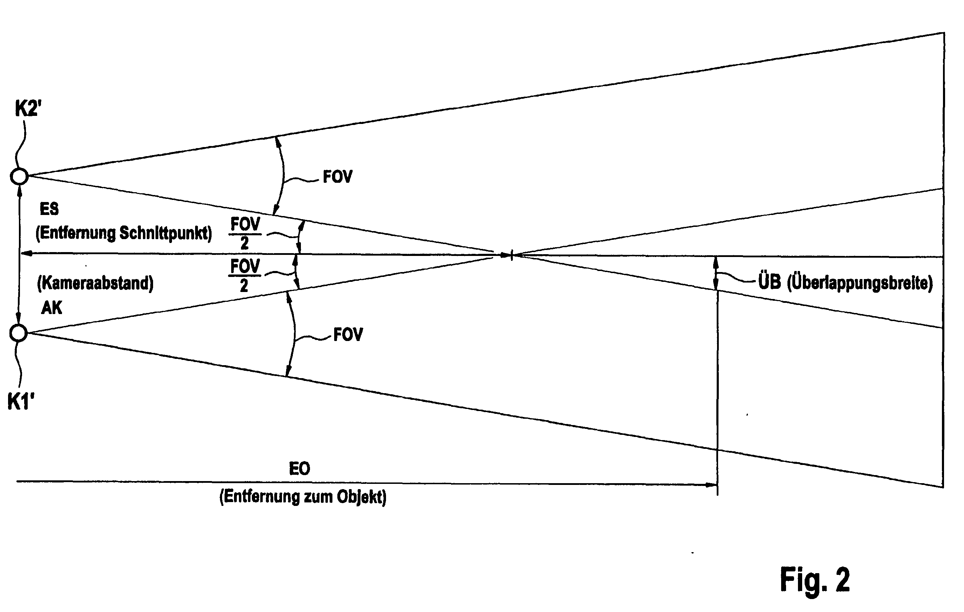

Hierzu wird zunächst mittels einer, weiter unten näher erläuterten digitalen Bildverarbeitungseinheit die Breite des Überlappungsbereichs Ü1 der Sichtbereiche je zweier Videokameras als Funktion des geometrischen Abstandes der Videokameras, der Winkel der jeweiligen Sichtbereiche und der Objektentfernung für eine Serie vorgegebener Objektentfernungen berechnet. Wie diese Berechnung im Prinzip durchgeführt werden kann, wird anhand eines in Fig. 2 dargestellten vereinfachten Falles erläutert.

In dem Ausführungsbeispiel nach Fig. 2 wird angenommen, daß zwei Videokameras K1' und K2' so angeordnet sind, daß ihre optischen Achsen parallel zueinander verlaufen. Aus Fig. 2 sind folgende geometrische Größen ablesbar:

AK = Kameraabstand
ES = Entfernung Schnittpunkt
FOV = Öffnungswinkel des Kameraobjektivs
ÜB = Überlappungsbreite
EO = Entfernung zum Objekt

Aus diesen Größen läßt sich nach bekannten geometrischen Beziehungen unter Verwendung der unten angegebenen Formeln I bis III die Überlappungsbreite ÜB in Abhängigkeit von der Entfernung zum Objekt berechnen.

$$\text{(I):} \quad ES = \frac{AK}{2 \cdot \tan\left(\dfrac{FOV}{2}\right)}$$

$$\text{(II):} \quad ÜB = \tan\left(\frac{FOV}{2}\right) \cdot (EO - ES)$$

$$(III): \quad \ddot{U}B = \tan\left[\frac{FOV}{2}\right] \bullet \left(EO - \frac{AK}{2 \bullet \tan\left[\frac{FOV}{2}\right]}\right)$$

Bei geometrisch komplizierteren Anordnungen der Kameras, beispielsweise wie in Fig. 1 dargestellt, wenn also die Kameras auf einem Kreis bzw. einem Kreissegment angeordnet sind, ergeben sich etwas aufwendigere Berechnungen, bzw müssen zusätzliche Bildverschiebungen durchgeführt werden.

Die in der oben angegebenen Weise für eine Serie vorgegebener Objektentfernungen berechneten Überlappungsbreiten werden von der Bildverarbeitungseinheit jeweils einer Pixelbreite am Rande jedes Monitorbildes zugeordnet und abgespeichert.

Im Betrieb des optronischen Beobachtungssystems wird vom Bediener eine bestimmte Entfernung angewählt, und es wird daraufhin von der Bildverarbeitungseinheit in Abhängigkeit von der angewählten Objektentfernung die entsprechende Pixelbreite abgerufen und an den aneinander anschließenden Rändern der Monitorbilder der Videokameras, deren Sichtbereiche sich überlappen, eine Anzahl von Pixeln, die jeweils der Überlappungsbreite ÜB, also dem halben Überlappungsbereich entspricht, eliminiert.

Bei Anwendung dieses Bildverarbeitungsverfahrens erhält man auf den Monitoren ein Bild, wie es beispielsweise in Fig. 4 dargestellt ist. Das gemäß Fig. 4 von den Videokameras K3 und K4 erfaßte Fahrzeug wird wiederum auf den Monitoren M1 und M2 dargestellt, wobei aber keine doppelte Abbildung von Teilen des Bildes auftritt, die Bilder also direkt aneinander ansetzbar sind. Allerdings erfolgt die Darstellung noch auf zwei Monitoren.

Es ist allerdings möglich, die Bildverarbeitung derart zu realisieren, daß nach der digitalen Zusammenfügung der Teilbilder Objekte, die sich am Bildrand befinden, stufenlos in die Bildmitte eines Monitors verschoben werden. Zu diesem Zweck werden die gewünschten Bilder digitalisiert und die digitalisierten Bilder mit Hilfe eines Videomischers zu einem Bild zusammengefügt. Das Ergebnis kann anhand von Fig. 4A erkannt werden. Das von den beiden Videokameras K3 und K4 gemäß der Anordnung nach Fig. 3 erfaßte Fahrzeug wird dann in der Bildmitte von Monitor M1 dargestellt. Es findet also quasi eine Verschiebung der Monitordarstellung in Pfeilrichtung V statt.

Wie den Fig. 3, 4 und 4A zu entnehmen, können die beiden Monitore M1 und M2 durch Weiterschalten jeweils unterschiedlichen Paaren der Videokameras K1 bis K8 zugeordnet werden.

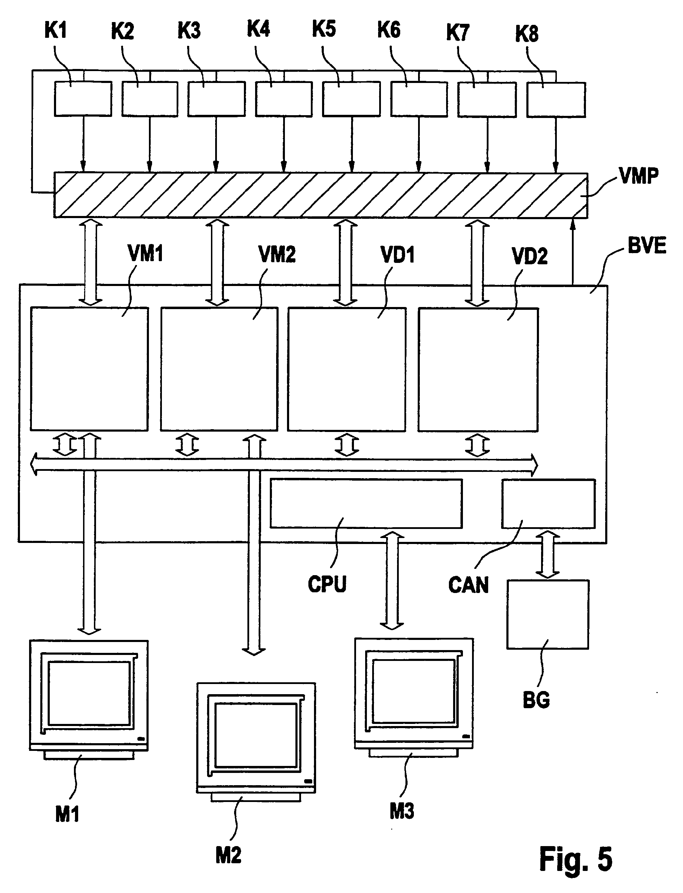

Fig. 5 zeigt im Blockschaltbild eine mögliche Realisierung einer Einrichtung zur Durchführung des oben geschilderten Bildverarbeitungsverfahrens.

Die Videokameras K1 bis K8 sind über einen Videomultiplexer VMP an die digitale Bildverarbeitungseinheit BVE angeschlossen, welche zwei Videodigitalisierer VD1 und VD2, zwei Videomischer VM1 und VM2 sowie eine CPU, einen CAN-Bus und die entsprechenden Schnittstellen enthält. An die Bildverarbeitungseinheit BVE sind die Monitore M1, M2 und M3 angeschlossen sowie ein Bedienungsgerät BG.

Es wird darauf hingewiesen, daß der Videomultiplexer VMP bei Bedarf dann eingesetzt wird, wenn die Anzahl der Videoquellen überschritten ist, die von der Bildverarbeitungseinheit BVE direkt verarbeitet werden kann. Als Bildverarbeitungseinheit BVE kann ein Standard-PC eingesetzt werden, der für die geforderten militärischen Anwendungen ausgelegt ist und mit entsprechenden Bildverarbeitungskarten und Bildverarbeitungssoftware ausgestattet ist. Die gesamte Überlappungsbereichsminimierung sowie bestimmte Bildverarbeitungsfunktionalitäten erfolgen in Echtzeit. Alle Bildverarbeitungskarten kommunizieren über einen internen Bus miteinander und arbeiten somit autark mit der restlichen Hardware.

## Patentansprüche

1. Bildverarbeitungsverfahren in einem optronischen Beobachtungssystem für militärische Fahrzeuge, insbesondere Kampffahrzeuge, wobei das Beobachtungssystem mindestens zwei Videokameras aufweist, deren optische Achsen in einer horizontalen Ebene einen vorgegebenen Winkelabstand aufweisen und die so angeordnet sind, daß sich ab einer vorgegebenen Objektentfernung ihre Sichtbereiche überlappen, wobei die Videokameras über ein, durch ein Bedienungsgerät ansteuerbares Bildübertragungssystem an mindestens zwei Monitore angeschlossen sind, **gekennzeichnet durch** folgende Verfahrensschritte:

a) mittels einer in das Bildübertragungssystem integrierten, einen Rechner enthaltenden digitalen Bildverarbeitungseinheit wird die Breite des Überlappungsbereichs der Sichtbereiche je zweier Videokameras als Funktion des geometrischen Abstandes der Videokameras, der Winkel der jeweiligen Sichtbereiche und der Objektentfernung für eine Serie vorgegebener Objektentfernungen berechnet, einer Pixelbreite am Rande jedes Monitorbildes zugeordnet und in der Bildverarbeitungseinheit abgespeichert;
b) im Betrieb wird von der Bildverarbeitungseinheit in Abhängigkeit von einer am Bedienungsgerät angewählten Objektentfernung die entsprechende gespeicherte Pixelbreite abgerufen und an den aneinander anschließenden Rändern der Monitorbilder der Videokameras, deren Sichtbereiche sich überlappen, eine Anzahl von Pixeln, die jeweils dem halben Überlappungsbereich entspricht, eliminiert.

2. Verfahren nach Anspruch 1, **dadurch gekennzeichnet, daß** durch die Bildverarbeitungseinheit die Monitorbilder der Videokameras, deren Sichtbereiche sich überlappen, nach dem Eliminieren der den Überlappungsbereichen zugeordneten Pixel unmittelbar aneinander anschließend auf den mindestens zwei Monitoren dargestellt werden.

3. Verfahren nach Anspruch 2, **dadurch gekennzeichnet, daß** durch die Bildverarbeitungseinheit in Abhängigkeit von einer Vorgabe am Bedienungsgerät vorgegebene Bereiche der Monitorbilder der Videokameras, deren Sichtbereiche sich überlappen, auf die Bildschirmmitte eines Monitors verschoben werden.

4. Verfahren nach Anspruch 3, **dadurch gekennzeichnet, daß** bei einem Beobachtungssystem mit mehr als zwei Videokameras ein vorgegebenes Paar von Videokameras für das Bedienungsgerät anwählbar ist, deren Bilder von der Bildverarbeitungseinheit auf mindestens zwei Monitoren dargestellt werden.

5. Einrichtung zur Durchführung des Verfahrens nach einem der Ansprüche 1 bis 4 mit einem optronischen Beobachtungssystem, bei welchem eine vorgegebene Anzahl von Videokameras (K1 bis K8), deren optische Achsen in einer horizontalen Ebene einen vorgegebenen Winkelabstand aufweisen und die so angeordnet sind, daß sich ab einer vorgegebenen Objektentfernung ihre Sichtbereiche überlappen, über ein von einem Bedienungsgerät (BG) ansteuerbaren Bildübertragungssystem an eine vorgegebene Anzahl von Monitoren (M1 bis M3) angeschlossen sind, **dadurch gekennzeichnet, daß** das Bildübertragungssystem eine digitale Bildverarbeitungseinheit (BVE) mit mindestens einem Videodigitalisierer (VD1, VD2), mindestens einem Videomischer (VM1, VM2), einer CPU, Bildverarbeitungssoftware zum Durchführen der Verfahrensschritte des Verfahrens nach einem der Ansprüche 1 bis 4 und entsprechenden Schnittstellen enthält.

6. Einrichtung nach Anspruch 5, **dadurch gekennzeichnet, daß** die Videokameras (K1 bis K8) über einen Videomultiplexer (VMP) an die Bildverarbeitungseinheit (BVE) angeschlossen sind.

## Claims

1. Image processing method in an optronic observation system for military vehicles, in particular combat vehicles, the observation system comprising at least two video cameras whose optical axes have a predetermined angular separation in a horizontal plane and which are arranged so that their fields of view overlap beyond a predetermined object range, the video cameras being connected to at least two monitors via an image transmission system which can be driven by operating equipment, **characterised by** the following method steps:

a) for a series of predetermined object ranges, the width of the overlap region of the fields of view of every two video cameras is calculated as a function of the geometrical separation of the video cameras, the angles of the respective fields of view and the object range, assigned to a pixel width at the edge of each monitor image and stored in the image processing unit by means of a digital image processing unit integrated into the image transmission system and containing a computer;
b) during operation, the corresponding stored pixel width is called up by the image processing unit as a function of an object range selected on the operating equipment, and a number of pixels which respectively corresponds to half of the overlap region are eliminated at the mutually adjacent edges of the monitor images of the video cameras.

2. Method according to Claim 1, **characterised in that** the monitor images of the video cameras, whose fields of view overlap, are subsequently represented immediately next to one another on the at least two monitors after eliminating the pixels assigned to the overlap region.

3. Method according to Claim 2, **characterised in that** predetermined regions of the monitor images of the video cameras, whose fields of view overlap, are displaced to the screen centre of a monitor by the image processing unit as a function of a specification on the operating equipment.

4. Method according to Claim 3, **characterised in that** in an observation system having more than two video cameras, the operating equipment can be used to select a predetermined pair of video cameras whose images are represented on at least two monitors by the image processing unit.

5. Device for carrying out the method according to one of Claims 1 to 4 with an optronic observation system, in which a predetermined number of video cameras (K1 to K8), whose optical axes have a predetermined angular separation in a horizontal plane and which are arranged so that their fields of view overlap beyond a predetermined object range, are connected to a predetermined number of monitors (M1 to M3) via an image transmission system which can be driven by operating equipment (BG), **characterised in that** the image transmission system contains an image processing unit (BVE) having at least one video digitiser (VD1, VD2), at least one video mixer (VM1, VM2), a CPU, image processing software for carrying out the method steps of the method according to one of Claims 1 to 4 and corresponding interfaces.

6. Device according to Claim 5, **characterised in that** the video cameras (K1 to K8) are connected to the image processing unit (BVE) via a video multiplexer (VMP).

## Revendications

**1.** Procédé de traitement d'image dans un système d'observation optronique pour des véhicules militaires, en particulier des véhicules de combat, dans lequel le système d'observation comporte au moins deux caméras vidéo dont les axes optiques présentent dans un plan horizontal une distance angulaire prédéfinie et qui sont disposées de telle sorte que leurs domaines de vision se chevauchent à partir d'une distance prédéfinie de l'objet, sachant que les caméras vidéo sont raccordées à au moins deux moniteurs par l'intermédiaire d'un système de transmission d'image manipulable par un appareil de commande, **caractérisé par** les étapes de procédé suivantes :

a) au moyen d'une unité de traitement numérique d'image intégrée dans le système de transmission d'image, contenant un calculateur, la largeur de la zone de chevauchement des zones de vision de deux caméras vidéo respectivement est calculée en fonction de la distance géométrique des caméras vidéo, des angles des zones de vision respectives et de l'éloignement de l'objet, pour une série d'éloignements prédéfinis d'objets, est affectée à une largeur de pixel au bord de chaque image de moniteur et est enregistrée dans l'unité de traitement d'image ;

b) en fonctionnement, la largeur de pixel correspondante enregistrée est appelée par l'unité de traitement d'image en fonction d'un éloignement de l'objet sélectionné sur l'appareil de commande et, aux bords se raccordant l'un à l'autre des images des moniteurs des caméras vidéo, dont les domaines de vision se chevauchent, un nombre de pixels qui correspond respectivement à la moitié de la plage de chevauchement est éliminé.

**2.** Procédé selon la revendication 1, **caractérisé en ce que**, par l'unité de traitement d'image, les images des moniteurs des caméras vidéo, dont les zones de vision se chevauchent, sont représentées se raccordant directement l'une à l'autre sur les au moins deux moniteurs après l'élimination des pixels affectés aux plages de chevauchement.

**3.** Procédé selon la revendication 2, **caractérisé en ce que**, par l'unité de traitement d'image, des zones spécifiées des images de moniteur des caméras vidéo, dont les zones de vision se chevauchent, sont décalées au milieu de l'écran d'un moniteur en fonction d'une spécification sur l'appareil de commande.

**4.** Procédé selon la revendication 3, **caractérisé en ce que**, pour un système d'observation avec plus de deux caméras vidéo, une paire de caméras vidéo prédéfinie peut être sélectionnée pour l'appareil de commande, dont les images sont représentées par l'unité de traitement d'image sur au moins deux moniteurs.

**5.** Dispositif pour l'exécution du procédé selon l'une des revendications 1 à 4 avec un système d'observation optronique dans lequel un nombre prédéfini de caméras vidéo (K1 à K8), dont les axes optiques présentent une distance angulaire dans un plan horizontal et qui sont disposées de telle sorte que leurs zones de vision se chevauchent à partir d'une distance prédéfinie de l'objet, sont branchées à un nombre prédéfini de moniteurs (M1 à M3) par un système de traitement d'image pouvant être piloté par un appareil de commande (BG), **caractérisé en ce que** le système de transmission d'image contient une unité numérique de traitement d'image (BVE) avec au moins un module de numérisation vidéo (VD1, VD2), au moins un module de mixage vidéo (VM1, VM2), une unité centrale, un logiciel de traitement d'image pour l'exécution des étapes de procédé du procédé selon l'une des revendications 1 à 4, et des interfaces correspondantes.

6. Dispositif selon la revendication 5, **caractérisé en ce que** les caméras vidéo (K1 à K8) sont branchées à l'unité de traitement des images (BVE) par un multiplexeur vidéo (VMP).

Fig. 1

EP 1 096 798 B1

**K2'**

**ES**
**(Entfernung Schnittpunkt)** $\frac{FOV}{2}$

FOV

**(Kameraabstand)** $\frac{FOV}{2}$
**AK**

ÜB (Überlappungsbreite)

FOV

**K1'**

FOV

**EO**
**(Entfernung zum Objekt)**

**Fig. 2**

EP 1 096 798 B1

EP 1 096 798 B1

K1　K2　K3　K4　K5　K6　K7　K8

M1

Fahrzeug

M2

**Fig. 3**

K1　K2　K3　K4　K5　K6　K7　K8

M1

Fahrzeug am Rand von M1 und M2

M2

**Fig. 4**

V

Fahrzeug in der Bildmitte von M1

K1　K2　K3　K4　K5　K6　K7　K8

M1　　M2

**Fig. 4A**

**Fig. 5**